# EUROPÄISCHE PATENTANMELDUNG

(11) **EP 2 330 399 A1**
(43) Veröffentlichungstag der Anmeldung: **08.06.2011**
(21) Anmeldenummer: 10193365.3
(22) Anmeldetag: 01.12.2010
(51) Int. Cl.: G01M 13/02, G01M 17/10, G01N 3/36

(54) **System zur Prüfung der Betriebsfestigkeit eines Probekörpers, insbesondere eines Radsatzes von Schienenfahrzeugen**

(30) Priorität: 01.12.2009 DE 102009047364
(71) Anmelder: Industrieanlagen-Betriebsgesellschaft mbH, 85521 Ottobrunn (DE)
(72) Erfinder: Matthias, Decker, 82256, Fürstenfeldbruck (DE); Rödling, Steffen, 83620, Feldkirchen-Westerham (DE); Fröschl, Jürgen, 85604, Zorneding (DE); Brettner, Bernd, 81549, München (DE)
(74) Vertreter: Dilg, Haeusler, Schindelmann Patentanwaltsgesellschaft mbH

(57) **Zusammenfassung**

Vorrichtung (40, 50, 60, 70) zur Prüfung der Betriebsfestigkeit eines Probekörpers (10) mit einer ersten Halteeinrichtung (11b), die zum momentenabstützenden Einspannen eines ersten Abschnitts (10b) des Probekörpers (10) eingerichtet ist, und einer zweiten Halteeinrichtung (11a), die zum Einspannen eines zweiten Abschnitts (10a) des Probekörpers (10) eingerichtet ist. Eine Biegemomenteinleiteeinrichtung (12) ist zum Anlegen eines Biegemoments als Prüflast an den mittels der ersten Halteeinrichtung (11b) und der zweiten Halteeinrichtung (11a) eingespannten Probekörper (10) eingerichtet. Die Biegemomenteinleiteeinrichtung (12) kann zum Anlegen des Biegemoments an den Probekörper (10) an der zweiten Halteeinrichtung (11a) angreifen.

## Beschreibung

Diese Anmeldung beansprucht die Priorität der Deutschen Patentanmeldung DE 10 2009 047 364, eingereicht am 1. Dezember 2009.

Die Erfindung betrifft eine Vorrichtung zur Prüfung der Betriebsfestigkeit eines Probekörpers.

Die Erfindung betrifft ferner eine Anordnung zur Prüfung der Betriebsfestigkeit eines Probekörpers.

Darüber hinaus betrifft die Erfindung ein Verfahren zur Prüfung der Betriebsfestigkeit eines Probekörpers.

Es ist auf vielen Technologiegebieten erforderlich, Probekörper einer Betriebsfestigkeitsprüfung zu unterziehen, bevor diese in den praktischen Einsatz gelangen. Dies ist aus Gründen der Betriebssicherheit notwendig.

Ein Radsatz für Schienenfahrzeuge stellt ein Beispiel für einen solchen Probekörper dar und enthält eine Radsatzwelle und zwei Radscheiben. Je nach Anwendung können auf der Radsatzwelle auch noch Bremsscheiben und/oder Zahnräder für den Antrieb montiert sein. Radsätze übertragen zum einen das Gewicht des Fahrzeugs auf die Schienen und führen zum anderen das Fahrzeug auf dem Gleis. Die beiden Radscheiben sind mit der Radsatzwelle in der Regel starr verbunden, sie können sich gegenüber der Welle und gegeneinander im Wesentlichen nicht drehen. Eine geringfügige Torsionsverformung zwischen den beiden Radscheiben ist allerdings möglich. Der Radsatz unterliegt hohen Beanspruchungen im Betrieb. Die Radsatzwelle wird durch das auf die Lager einwirkende Gewicht auf Biegung beansprucht. Weil sich der Radsatz beim Rollen des Fahrzeuges dreht, ist die Biegelast eine umlaufende Wechselbeanspruchung. Die Radscheiben müssen Kräfte von Spurführung und Antrieb bzw. Bremse übernehmen. In der Entwicklung eines solchen Radsatzes sollte aus Sicherheitsgründen eine Betriebsfestigkeitsprüfung durchgeführt werden.

DE 26 01 259 offenbart eine Einrichtung zur betriebsähnlichen Prüfung von Radsätzen für Schienenfahrzeuge, wobei das Rad in einer umlaufenden Trommel mit Schienenprofil abläuft, und Einrichtungen vorgesehen sind, die das Rad und die Welle senkrecht und/oder seitlich belasten.

DE 36 04 186 offenbart ein Verfahren und eine Einrichtung zur Prüfung von Schienenfahrzeugradsätzen unter betriebsähnlichen Belastungsbedingungen, worin in die Radaufstandspunkte der beiden Schienenfahrzeugräder über die Schienenfahrzeugachse derselben Radial- und/oder Axialkräfte zur Simulation von unterschiedlichsten Belastungsbedingungen eingeleitet werden können. Es ist außerdem möglich, zusätzlich zu den über die Schienenfahrzeugachse eingeleiteten Axialkräften über den Radreifen oder über die Schiene, auf welcher das jeweilige Schienenfahrzeugrad während der Prüfung läuft, Zusatzaxialkräfte in den Radaufstandspunkt des einen Schienenfahrzeugrads oder in die Radaufstandspunkte beider Schienenfahrzeugräder einzuleiten. Auf diese Weise kann ein gesamter Schienenfahrzeugradsatz geprüft und insbesondere festgestellt werden, wo die schwächsten Belastungsstellen sind.

US 3,605,488 offenbart eine Maschine zum Anlegen von Lasten an eine Testprobe, die an einem Ende zum Einleiten einer Biegebeanspruchung eingespannt ist und an einem anderen Ende zum Einleiten einer Axiallast- bzw. Drehmomentbeanspruchung eingespannt ist.

DE 32 44 464 offenbart eine Werkstoff- und Bauteil-Prüfmaschine zur Erzeugung beliebig zeitveränderlicher Biege- und bzw. oder Torsionsbeanspruchungen in vorzugsweise stabförmigen Prüfkörpern, bei welcher der Prüfkörper mit seinen beiden Enden in jeweils einer Einspannvorrichtung befestigt ist, die eine Einspannvorrichtung sich am vorderen Ende einer um ihre Längsachse drehbaren biege- und torsionssteifen Welle, welche in zwei vorzugsweise hydrostatischen, an dem Maschinengestell befestigten Lagern gelagert ist, befindet, mit dem hinteren Ende der Welle ein sich in radialer Richtung erstreckender Hebelarm verbunden ist, an welchem eine Kraftquelle angreift, die andere Einspannvorrichtung sich im Zentrum eines biege- und torsionssteifen Querjochs, an dessen rückwärtigem Ende rechtwinklig zueinander je eine Kraftquelle angreift, befindet, und das Querjoch mittels seiner beiden Arme über ein Kardangelenk am Maschinengestell abgestützt ist.

DE 10 2005 044 903 offenbart eine Vorrichtung zur Belastungsprüfung einer Radsatzwelle, mit einer Halteeinrichtung, in der die Radsatzwelle im Bereich beider Enden rotierbar gelagert werden kann, einer an der Radsatzwelle angreifenden Antriebseinrichtung für einen rotatorischen Antrieb der Radsatzwelle in der Halteeinrichtung, und zumindest einer Belastungseinrichtung für die Radsatzwelle, wobei die Belastungseinrichtung ein Kraftübertragungselement, das eine in der Halteeinrichtung gelagerte Radsatzwelle an einer Stelle umschließt und eine Rotation der Radsatzwelle in der Halteeinrichtung zulässt, und zwei mit dem Kraftübertragungselement verbundene Krafteinleitungseinheiten umfasst, von denen eine erste Krafteinleitungseinheit eine vertikal zur Radsatzwelle wirkende Kraft auf die Radsatzwelle und eine zweite Krafteinleitungseinheit eine parallel zur Radsatzwelle wirkende Kraft in einem Abstand zur Radsatzwelle auf das Kraftübertragungselement ausüben können.

Allerdings erlauben diese herkömmlichen Prüfarchitekturen keine Prüfung eines Probekörpers, wie beispielsweise eines Radsatzes, unter betriebsnahen Bedingungen und/oder bergen Sicherheitsrisiken während des Prüfbetriebs. Zudem ist bei den vorbekannten Lösungen mit rotierendem Probekörper dieser während der Prüfung einer Messung oder Inspektion nicht oder nur stark erschwert zugänglich.

Es ist eine Aufgabe der vorliegenden Erfindung, eine Prüfarchitektur bereitzustellen, die eine Prüfung eines Probekörpers unter betriebsnahen Bedingungen ermöglicht und außerdem einen sicheren Prüfbetrieb gewährleistet sowie die Möglichkeit der Messung und Inspektion selbst bei laufender Prüfung bietet.

Diese Aufgabe wird durch eine Vorrichtung, eine Anordnung und ein Verfahren zur Prüfung der Betriebsfestigkeit eines Probekörpers mit den Merkmalen gemäß den unabhängigen Patentansprüchen gelöst.

Gemäß einem Ausführungsbeispiel der vorliegenden Erfindung ist eine Vorrichtung zur ausreichend betriebsnahen Prüfung der Betriebsfestigkeit eines Probekörpers mit einer ersten Halteeinrichtung geschaffen, die zum momentenabstützenden (bzw. zum momentenfesten) Einspannen eines ersten Abschnitts (zum Beispiel eines ersten Endabschnitts) des Probekörpers eingerichtet ist. Die Vorrichtung weist ferner eine zweite Halteeinrichtung auf, die zum entsprechenden Einspannen eines zweiten Abschnitts (zum Beispiel eines zweiten Endabschnitts) des Probekörpers eingerichtet ist. Ferner enthält die Vorrichtung eine Biegemomenteinleiteeinrichtung, die zum Anlegen eines Biegemoments (und/oder einer Axialkraft) als Prüflast an den mittels der ersten Halteeinrichtung und der zweiten Halteeinrichtung eingespannten Probekörper eingerichtet ist. Die Biegemomenteinleiteeinrichtung kann zum Anlegen des Biegemoments an den Probekörper (insbesondere direkt) an der zweiten Halteeinrichtung angreifen.

Gemäß einem anderen Ausführungsbeispiel der vorliegenden Erfindung ist eine Anordnung zur Prüfung der Betriebsfestigkeit eines Probekörpers geschaffen, wobei die Anordnung eine Vorrichtung mit den oben beschriebenen Merkmalen und den Probekörper aufweist, der mittels der ersten Halteeinrichtung und der zweiten Halteeinrichtung der Vorrichtung eingespannt oder einspannbar ist.

Gemäß noch einem anderen exemplarischen Ausführungsbeispiel der Erfindung ist ein Verfahren zur Prüfung der Betriebsfestigkeit eines Probekörpers bereitgestellt. Bei dem Verfahren wird ein erster Abschnitts des Probekörpers an einer ersten Halteeinrichtung momentenabstützend eingespannt und wird ein zweiter Abschnitt des Probekörpers an einer zweiten Halteeinrichtung eingespannt. Ferner wird ein Biegemoment als Prüflast an den mittels der ersten Halteeinrichtung und der zweiten Halteeinrichtung eingespannten Probekörper angelegt, wobei das Biegemoment an (oder mittels) der zweiten Halteeinrichtung in den Probekörper eingeleitet wird.

Im Rahmen dieser Anmeldung kann unter einem "Probekörper" ein beliebiges Bauteil oder eine bauteilnahe Probe oder eine beliebige Probe verstanden werden, das oder die unter realitätsnahen Bedingungen dahingehend getestet werden soll, wie es oder sie auf eine definierte Belastung durch eine beliebige Kombination aus Biegung, umlaufender Biegung und Axialkraft reagiert. Beispielsweise kann ein solcher Probekörper eine Radsatzwelle für ein Schienenfahrzeug sein. Der Probekörper kann aber auch ein anderer Körper sein, zum Beispiel eine Motorwelle, eine Achse eines Straßenfahrzeugs oder generell ein anderes zum Beispiel längliches oder gestrecktes Bauteil, das im Betrieb (zum Beispiel im bestimmungsgemäßen Betrieb, bei Missbrauch oder in einem Sonderlastbetrieb) einer Axial- oder Biegebeanspruchung ausgesetzt sein kann bzw. unter einer Axial- oder Biegebeanspruchung untersucht werden soll. Zum Beispiel können rotationssymmetrische oder im Wesentlichen rotationssymmetrische Probekörper geprüft werden.

Unter einem "momentenabstützenden Einspannen" (oder einem momentenfesten Einspannen) des Probekörpers an der ersten Halteeinrichtung kann insbesondere verstanden werden, dass der erste Abschnitt des Probekörpers derart unbeweglich, fest, rigide oder starr eingespannt wird, dass auf den Probekörper einwirkende Momente an der Einspannstelle der ersten Halteeinrichtung aufgenommen werden können. Anders ausgedrückt wird ein freies Verschieben, Drehen oder Schwenken des Probekörpers an der Einspannstelle der ersten Halteeinrichtung unterbunden. Mit dem momentenabstützenden Einspannen kann dem dort eingespannten Abschnitt des Probekörpers die freie Beweglichkeit entzogen werden. Dies ermöglicht es dann, mit einer angrenzend angebrachten Messeinrichtung die auf den Probekörper einwirkenden Belastungen präzise und ohne Artefakte abzufühlen. Bei einem kraftabstützenden oder kraftfesten Einspannen des Probekörpers an der ersten Halteeinrichtung kann der erste Abschnitt des Probekörpers derart eingespannt werden, dass sämtliche auf den Probekörper einwirkende Kräfte an der Einspannstelle der ersten Halteeinrichtung aufgenommen werden können. Zum momentenfesten Einspannen kann die erste Halteeinrichtung mit einer Basis oder mit einem Fundament der Vorrichtung verbunden sein. Die erste Halteeinrichtung kann fest verankert sein.

An der zweiten Halteeinrichtung des Probekörpers kann die Einspannung ebenfalls momentenabstützend, insbesondere kraft- und momentenabstützend, vorgenommen werden. Alternativ kann an der zweiten Halteeinrichtung des Probekörpers die Einspannung allerdings auch so vorgenommen werden, dass dem zweiten Abschnitt des Probekörpers hier zumindest hinsichtlich eines Freiheitsgrads (zum Beispiel hinsichtlich der Drehbarkeit um eine Einspannachse mittels einen anbringbaren Drehantriebs) die Beweglichkeit belassen wird, hinsichtlich eines anderen Freiheitsgrads (zum Beispiel betreffend eine seitliche Bewegbarkeit) die Beweglichkeit aber ausgeschlossen wird.

Unter einer "Biegemomenteinleiteeinrichtung" kann eine Einrichtung verstanden werden, die an den Probekörper ein Biegemoment einer vorgebbaren Amplitude und Richtung anlegen kann. Es kann zum Beispiel ein dynamisch umlaufendes Biegemoment an den Probekörper angelegt werden, um eine wechselnde Biegebeanspruchung, insbesondere eine Umlaufbiegebeanspruchung, des Probekörpers abzubilden. Es kann alternativ oder kombiniert ein statisches Biegemoment für einen vorgebbaren Zeitraum an den Probekörper angelegt werden. Alternativ kann eine reine Axialbelastung in den Probekörper eingeleitet werden. Alternativ kann eine beliebige Kombination aus Biege- und Axialbelastung überlagert werden kann. Die Biegemomenteinleiteeinrichtung kann ferner so konfiguriert sein, dass jederzeit oder nur zu einem bestimmten Zeitpunkt das angelegte Biegemoment bzw. eine Biegebelastung über den gesamten Probekörper hinweg gleich ist.

Ein Ausführungsbeispiel der Erfindung beruht auf dem Gedanken, eine Vorrichtung zur Prüfung des Verhaltens eines ruhenden (oder zumindest im Wesentlichen ruhenden) Probekörpers unter Biegebeanspruchung entlang einer Längsachse des Probekörpers zu schaffen, wobei der Probekörper an einem ersten Bereich momentenfest eingespannt ist und an einem zweiten Bereich mit einer Biegemomenteinleiteeinrichtung verbunden ist. Die Biegemomenteinleiteeinrichtung kann derart ausgebildet sein, dass in den Probekörper ein Prüfmoment derart einleitbar ist, dass eine Biegebelastung im Probekörper zwischen dem ersten Bereich und dem zweiten Bereich, ggf. über die gesamte Ausdehnung des Probekörpers hinweg, im Wesentlichen konstant ist. Diese Prüfarchitektur mit einer momentenfesten Einspannung an einer Seite und einer Biegemomentbeaufschlagung an einer anderen Seite des Prüfkörpers ermöglicht eine Prüfung des Probekörpers unter betriebsnahen, realistischen Bedingungen. Aufgrund des zumindest einseitig festen Einspannens ist ein gefahrloser Prüfbetrieb gewährleistet, da eine Bewegung des Prüfkörpers entbehrlich ist. Ferner ist an einem in Ruhe befindlichen Prüfkörper auch eine Erkennung von möglichen Rissen oder dergleichen des Probekörpers *in situ* möglich.

Ein Vorteil einer Vorrichtung gemäß einem Ausführungsbeispiel der Erfindung besteht somit darin, dass das Verhalten unter Biegebeanspruchung bzw. die Betriebsfestigkeit in einem ruhenden Zustand des Probekörpers geprüft werden kann. Dies ermöglicht eine zum Beispiel optische Überwachung des Prüfvorgangs am ruhenden Probekörper. Überdies sind Messeinrichtungen, die mit dem Probekörper direkt zusammenwirken, bedarfsweise problemlos an den ruhenden Probekörper anschließbar. Derartige Messeinrichtungen können beispielsweise Dehnmessstreifen, Dehnungsaufnehmer, Reißdrähte, Potentialsonden oder optische Messeinrichtungen sein.

Ein wesentlicher Nachteil herkömmlicher Konzepte wie der US 3,605,488 und der DE 32 44 464 gegenüber Ausführungsbeispielen der vorliegenden Erfindung ist in beiden Fällen eine Verformungsbehinderung durch die Zwangskopplung zwischen Auslenkung und Winkelstellung der jeweils momenteneinleitenden Einspannung. Auf der Abstützungsseite sind die Proben jeweils zur Abstützung des Biegemoments gelagert. Die momenteneinleitende Einspannung wird jeweils ausgelenkt. Dabei tritt bei US 3,605,488 durch das Kugelgelenk bzw. bei DE 32 44 464 durch das Kardangelenk jeweils eine Winkeländerung gegenüber der abstützenden Einspannung auf, die in einem festen Bezug zur Auslenkung steht. Die eingespannte Probe beschreibt unter dem eingeleiteten Biegemoment eine von der Probengeometrie abhängige Biegelinie. Der Winkel zwischen den Tangenten an die Biegelinie am momenteneinleitendem und am gegenüberliegenden Ende der Probe stimmt dabei im allgemeinen Fall nicht mit dem durch das Kugel-/Kardangelenk vorgegebenen Winkel überein. Hierdurch kommt es zu Zwangskräften sowie einem gestörten und im Allgemeinen nicht bekannten Biegemomentenverlauf über die Probe. Das Prüfergebnis ist damit nicht bewertbar.

Erfindungsgemäß kann eine gute Zugänglichkeit der Probe im eingebauten Zustand für Instrumentierung und Inspektion erreicht werden. Auch ist ein gegenüber herkömmlichen Ansätzen viel einfacherer mechanischer Aufbau möglich.

Gegenüber herkömmlichen Konzepten, bei denen die Probe rotiert, ist erfindungsgemäß die Unfallgefahr reduziert, die Instrumentierbarkeit verbessert und eine Inspektion selbst bei laufendem Versuch ermöglicht.

Im Weiteren werden Ausgestaltungen der Vorrichtung beschrieben. Diese gelten auch für die Anordnung und das Verfahren.

Die erste Halteeinrichtung kann zum kraft- und momentenabstützenden (bzw. zum kraft- und momentenfesten) Einspannen des ersten Abschnitts (zum Beispiel eines ersten Endabschnitts) des Probekörpers eingerichtet sein. Eine solche Konfiguration kann insbesondere vorteilhaft sein, wenn auf den Probekörper eine axiale Zug- oder Druckkraft als Prüflast angelegt wird.

Die zweite Halteeinrichtung kann außerdem so gestaltet sein, dass eine Befestigung an verschiedenen Stellen über die Länge des Probekörpers möglich ist. Dies ermöglicht die gezielte Prüfung verschiedener Abschnitte des Probekörpers.

Die Biegemomenteinleiteeinrichtung kann mindestens eine Linearantriebseinheit (das heißt genau eine Linearantriebseinheit oder eine Mehrzahl von Linearantriebseinheiten) aufweisen, die alle an der zweiten Halteeinrichtung angreifen können. Es können zum Beispiel ein, zwei, drei oder mehr Linearantriebseinheiten vorgesehen werden. Eine abgestimmte Bewegung der Linearantriebseinheiten kann derart auf die zweite Halteeinrichtung einwirken, dass auf den an der zweiten Halteeinrichtung eingespannten Probekörper ein vorgebbares, insbesondere umlaufendes, Biegemoment anlegbar ist.

Antriebsachsen der Mehrzahl von Linearantriebseinheiten können parallel zueinander und um den Probekörper herum angeordnet sein. Die Antriebsachsen können von dem Probekörper beabstandet angeordnet sein. Die Abstände der Antriebsachen zu dem Probekörper können gleich sein. Dies ermöglicht eine symmetrische Anordnung und ein hohes Maß an Designfreiheit beim Einleiten gewünschter Biegungsmomente in den Probekörper, das aufgrund des Beabstandens der Probekörper noch gut zugänglich bleibt. Die Beabstandung zu dem Probekörper erlaubt es ferner, den Probekörper während der Betriebsfestigkeitsprüfung zu überwachen, zum Beispiel mittels an dem Probekörper anbringbarer Messeinrichtungen.

Die Antriebsachse(n) der Linearantriebseinheit(en) kann/können parallel zu einer Einspannachse des Probekörpers verlaufen. Diese Einspannachse kann einer Erstreckungsrichtung des Probekörpers zwischen der ersten Halteeinrichtung und der zweiten Halteeinrichtung entsprechen. Somit können die Einspannstellen an den beiden Halteeinrichtungen gedanklich miteinander verbunden werden, um dadurch die Einspannachse zu definieren. Bei einer Verbiegung des Probekörpers infolge des Anlegens der Biegebeanspruchung kann der Probekörper geringfügig aus der Antriebsachse ausgelenkt werden, zum Beispiel aus dieser herausgebogen werden. Der Fachmann wird aber verstehen, dass die Antriebsachse(n) dann immer noch im Wesentlichen parallel zu der Einspannachse verläuft/verlaufen.

Die zweite Halteeinrichtung kann als flächiger Körper ausgebildet sein. Insbesondere kann die zweite Halteeinrichtung als plattenförmiger Körper ausgebildet sein. Mittels Ausgestaltens der zweiten Halteeinrichtung als Exzenterplatte bzw. Taumelplatte kann mit günstigen Hebelarmen eine Biegemomenteinleitung von der oder den Linearantriebseinheit(en) über die Platte auf den Probekörper erfolgen und ein zum Beispiel mittig in der Platte eingespannter Probekörper einer wohldefinierten Biegebeanspruchung ausgesetzt werden.

Somit kann die zweite Halteeinrichtung in einem zentralen Bereich einer Belastungsplatte ausgebildet sein, an welcher der Probekörper mittig und die mindestens eine Linearantriebseinheit außermittig (zum Beispiel in einem Randbereich) angreift. Zum Beispiel kann der Probekörper im Wesentlichen in einem Schwerpunkt der Belastungsplatte eingespannt werden, wohingegen die Linearantriebseinheit(en) an einem äußeren Umfang der Belastungsplatte angreifen kann/können, und zwar bei mehreren Linearantriebseinheiten bevorzugt symmetrisch entlang des Umfangs verteilt. Werden zum Beispiel drei Linearantriebseinheiten vorgesehen, so können diese entlang des Umfangs der Belastungsplatte jeweils um 120° gegeneinander winkelversetzt angeordnet sein. Bei Vorsehen von vier Linearantriebseinheiten kann ein Winkel zwischen benachbarten Linearantriebseinheiten zum Beispiel 90° betragen. Mit solchen winkelsymmetrischen Anordnungen kann die Belastung, die auf die Belastungsplatte während des Prüfverfahrens einwirkt, moderat gehalten werden, so dass eine lange Lebensdauer der Vorrichtung erreichbar ist.

Jede der mindestens einen Linearantriebseinheit kann als Zylinder-KolbenAggregat ausgebildet sein. Bei einer solchen Ausgestaltung kann ein Hohlzylinder an einer Basis oder einem Fundament (zum Beispiel gelenkig gelagert oder elastisch gelagert) befestigt werden und ein Kolben in dem Zylinder reziprozieren (das heißt sich hin- und herbewegen). Mit einer solchen - zum Beispiel hydraulischen - Konfiguration ist eine effiziente Übertragung einer Linearkraft auf die Belastungsplatte ermöglicht, welche dann seitlich verkippt wird und dadurch ein Biegemoment in den darin eingespannten Probekörper einleiten kann. Die Verbindung jeder Linearantriebseinheit mit dem Fundament sowie mit der Belastungsplatte kann in der Art gelenkig oder elastisch ausgeführt werden, dass Zwangskräfte vermieden werden. Vorteilhaft ist die Biegemomenteinleiteeinrichtung eingerichtet, ein konstantes oder zumindest im Wesentlichen konstantes Biegemoment über die gesamte Länge des Probekörpers hinweg anzulegen. Ein solches gleichmäßiges Beaufschlagen der gesamten Erstreckung des Probekörpers mit einem im Wesentlichen gleichen Biegemoment erlaubt besonders aussagekräftige Rückschlüsse hinsichtlich möglicher Schwachstellen an dem Probekörper. Ein solches Einleiten eines konstanten Biegemoments kann durch eine symmetrische Anordnung von Komponenten der Biegemomenteinleiteeinrichtung bezüglich der Einspannung des Probekörpers erfolgen. Ein solches Einleiten eines konstanten Biegemoments kann ferner dadurch erfolgen, dass der Probekörper an zwei gegenüberliegenden Endabschnitten in die zwei Halteeinrichtungen eingespannt wird. Durch eine solche endseitige Lagerung kann eine konstante Biegebeanspruchung über die gesamte Länge des Prüfkörpers hinweg erzeugt werden.

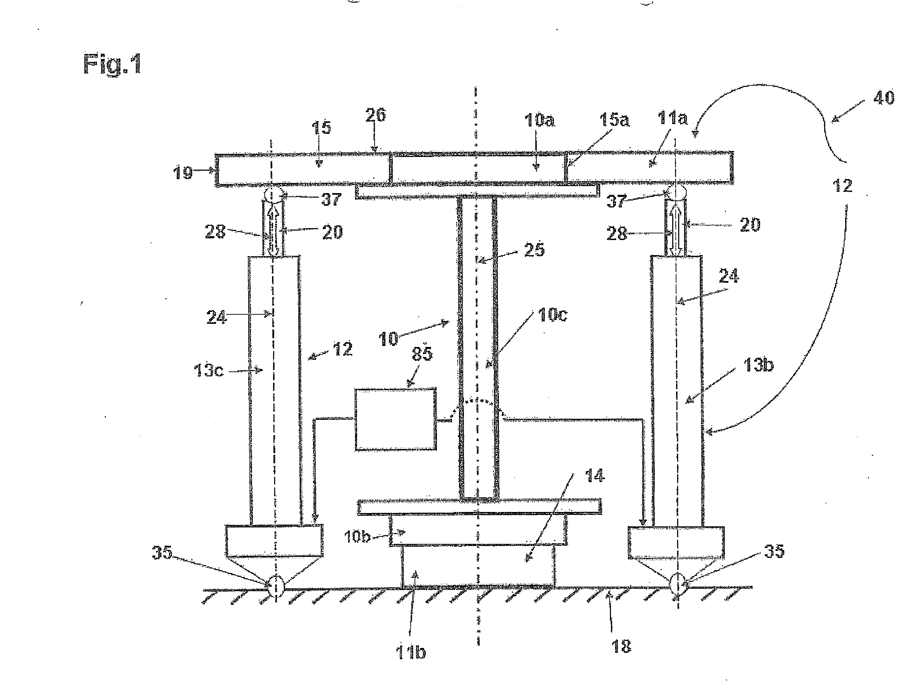

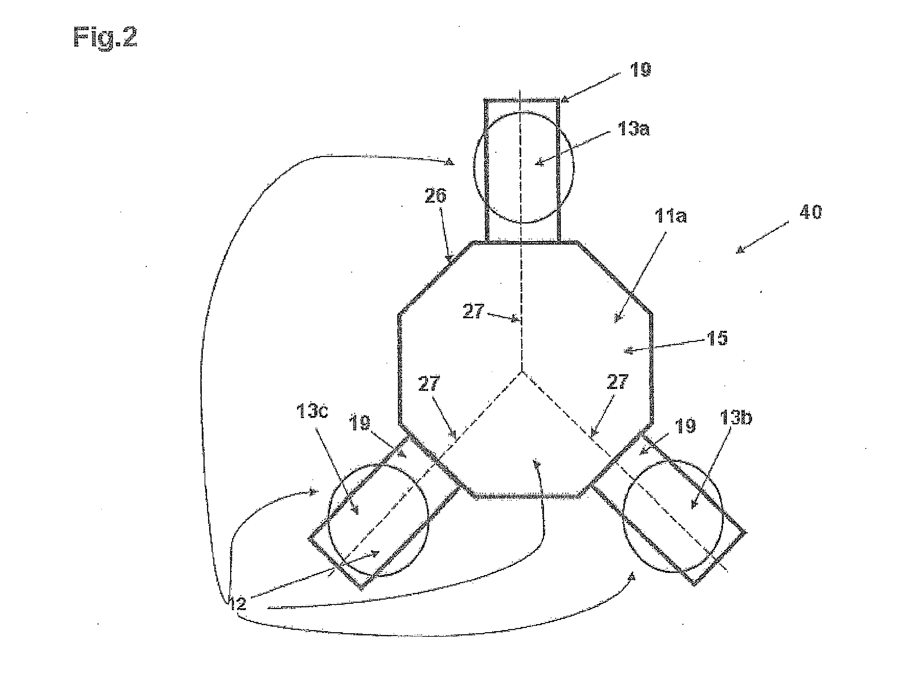

Die Biegemomenteinleiteeinrichtung kann eingerichtet sein, alternativ oder ergänzend zum Einleiten eines Biegemoments eine Druck- oder Zugbeanspruchung an den Probekörper anzulegen. Somit kann die Vorrichtung zum Beispiel in einem ersten Betriebszustand betreibbar sein, in dem ein Biegemoment, aber keine Druck- oder Zugbeanspruchung an den Probekörper angelegt ist. Die Vorrichtung kann ferner in einem zweiten Betriebszustand betreibbar sein, in dem kein Biegemoment, aber eine Druck- oder Zugbeanspruchung an den Probekörper angelegt ist. Die Vorrichtung kann ferner in einem dritten Betriebszustand betreibbar sein, in dem sowohl ein Biegemoment als auch eine Druck- oder Zugbeanspruchung an den Probekörper angelegt ist. Wenngleich die Biegemomenteinleiteeinrichtung also strukturell eingerichtet ist, in Biegemoment in den Probekörper einleiten zu können, kann sie dennoch in einem Modus betrieben werden, in dem sie anstelle eines Biegemoments nur eine Kraft, insbesondere eine Druck- oder Zugkraft, in den Probekörper einleitet. Anschaulich kann für das Beispiel von drei winkelsymmetrisch angeordneten Linearantriebseinheiten (vergleiche zum Beispiel Fig. 1 und Fig. 2) durch ein asynchrones Auf- und Abbewegen der einzelnen Linearantriebseinheiten ein Biegemoment erzeugt werden, wohingegen mittels eines gemeinsamen, synchronen Aufwärtsbewegens der Linearantriebseinheiten eine Zugkraft auf den Körper angelegt werden kann. Durch ein gemeinsames, synchrones Abwärtsbewegen der einzelnen Linearantriebseinheiten kann eine Druckkraft auf den Probekörper ausgeübt werden. Bei einer entsprechenden Ansteuerung der Linearantriebseinheiten kann auch gleichzeitig ein Biegemoment und eine Zug- oder Druckkraft auf den Probekörper ausgeübt werden.

Die Biegemomenteinleiteeinrichtung kann zum Anlegen eines um eine Einspannachse des Probekörpers umlaufenden Biegemoments an den Probekörper eingerichtet sein. Die Einspannachse kann einer Erstreckungsrichtung des Probekörpers zwischen der ersten Halteeinrichtung und der zweiten Halteeinrichtung entsprechen. Ein solches Umlaufen des Biegemoments kann zum Beispiel durch mehrere Linearantriebseinheiten realisiert werden, die anschaulich ausgedrückt mit einer um den Probekörper umlaufenden Wellenbewegung auf eine Belastungsplatte eine zeitlich abhängige Kippkraft ausüben, womit das Biegemoment auch um den Probekörper umläuft. Dies ist im Rahmen einer sicheren und mechanisch einfachen Ausgestaltung ermöglicht. Insbesondere ist dadurch das Vorsehen einer aufwendigen und gefährlichen Unwucht, die sich um den Probekörper herum bewegt, vermieden.

Die Vorrichtung kann eine Messeinrichtung aufweisen, die zum Messen einer Reaktion des Probekörpers auf die angelegte Prüflast eingerichtet ist. Es kann eine Messeinrichtung vorgesehen sein, oder es können mehrere Messeinrichtungen angebracht werden. Diese können direkt auf den Probekörper aufgebracht werden, zum Beispiel in Form eines Dehnungsmessstreifens auf einen zentralen Abschnitt des Probekörpers aufgeklebt werden. Der oder die Messeinrichtungen können beabstandet zu dem Probekörper auf diesen zu Sensorzwecken einwirken. Zum Beispiel kann eine solche Messeinrichtung in Form einer Kamera zum Detektieren von Rissen eingerichtet sein. Es ist auch möglich, eine Messeinrichtung an der Vorrichtung selbst anzubringen, zum Beispiel eine Messdose zum Erfassen von Momenten und/oder Kräften mit einer der Halteeinrichtungen zu koppeln.

Bevorzugt ist die Messeinrichtung an dem ersten Abschnitt des Probekörpers angeordnet. An diesem ersten Abschnitt des Probekörpers ist der Probekörper zum Beispiel kraft- und momentenfest eingespannt, so dass eine dort angeordnete Messeinrichtung unverfälscht die Reaktion des Probekörpers auf die angelegte Biegebeanspruchung erfassen kann. Dies garantiert eine hohe Präzision bei der Prüfung.

Die Vorrichtung kann eine Torsionsmomenteinleiteeinrichtung zum Anlegen eines Torsionsmoments als Prüflast an den Probekörper aufweisen. Somit kann zusätzlich zu der anzulegenden Biegebeanspruchung (und/oder Druck- bzw. Zugbeanspruchung) auch ein Torsionsmoment in den Probekörper eingeleitet werden, was eine noch praxisnähere und vielfältigere Untersuchung des Probekörpers ermöglicht. Ein solches Torsionsmoment kann anschaulich so angelegt werden, dass es zu einer leichten Verdrillung des Probekörpers führt.

Zum Beispiel kann die Torsionsmomenteinleiteeinrichtung vorteilhaft an dem zweiten Abschnitt des Probekörpers angeordnet sein. Somit kann die Torsionsmomenteinleiteeinrichtung an oder nahe der zweiten Halteeinrichtung angeordnet werden, so dass das Einleiten eines Torsionsmoments an einer ähnlichen Stelle des Probekörpers erfolgt wie das Einleiten der Biegebeanspruchung (und/oder der Zug- bzw. Druckbeanspruchung). Dies ermöglicht auch das Einleiten eines Torsionsmoments in den gesamten Probekörper und beabstandet vorteilhaft die Messeinrichtung von den Kraft- oder Momenteinleiteeinrichtungen, wenn die Messeinrichtung an der ersten Halteeinrichtung angebracht ist. Dies ermöglicht eine platzsparende Konfiguration und eine gute Zugänglichkeit für einen Benutzer.

Alternativ oder ergänzend kann die Vorrichtung eine Zusatzlasteinleiteeinrichtung zum Anlegen einer Zusatzlast als Prüflast an den Probekörper aufweisen. Die Zusatzlasteinleiteeinrichtung kann gegenüber der Biegemomenteinleiteeinrichtung bzw. der optionalen Torsionsmomenteinleiteeinrichtung beabstandet vorgesehen sein und kann auch in einem Abstand von einer Messeinrichtung angeordnet werden. Zum Beispiel kann bei Realisierung des Probekörpers als Radwelle eine Zusatzlasteinleiteeinrichtung eine Bremskraft simulieren, die bei bestimmungsgemäßem Betrieb auf die Radwelle beim Bremsen einwirkt. Dadurch kann noch realistischer ein Belastungsprofil, das auf einen Probekörper einwirkt, abgebildet werden.

Vorteilhaft kann die Zusatzlasteinleiteeinrichtung an einen zentralen Abschnitt des Probekörpers zwischen dem ersten Abschnitt des Probekörpers und dem zweiten Abschnitt des Probekörpers angeordnet sein (zum Beispiel an einer Welle eines Radsatzes), um auch dort lokal definiert Lasten anlegen zu können.

Die Zusatzlasteinleiteeinrichtung kann zum Einleiten einer Zusatzlast in den Probekörper in Form einer Querkraft und/oder eines beliebigen Moments eingerichtet sein. Andere Belastungen können benutzerdefiniert von der Zusatzlasteinleiteeinrichtung aufgebracht werden.

Die Biegemomenteinleiteeinrichtung kann eingerichtet sein, an den Probekörper ein Umlaufbiegemoment, das heißt insbesondere ein dynamisch umlaufendes Biegemoment, oder ein Axialbiegemoment, das heißt ein statisch entlang einer Richtung angreifendes Biegemoment, anzulegen. Das Anlegen eines Umlaufbiegemoments ist insbesondere mit einer Vorrichtung möglich, an deren Belastungsplatte mehrere Linearantriebseinheiten angreifen. Das Anlegen eines Axialbiegemoments ist auch mit einer Vorrichtung möglich, an deren Belastungsplatte nur eine Linearantriebseinheit angreift.

Die Vorrichtung kann eine Steuereinheit oder eine Regelungseinheit aufweisen, die eingerichtet ist, eine Last-Zeit-Charakteristik vorzugeben, entsprechend welcher die Prüflast an den eingespannten Probekörper anzulegen ist. Damit ist es möglich, mit oder ohne Rückkopplungssignal von dem Probekörper ein beliebiges benutzerdefiniertes zeitliches Lastprofil hinsichtlich Biegebeanspruchung, Druck-/Zugbeanspruchung und/oder Torsionsbeanspruchung an den Probekörper anzulegen.

Im Weiteren werden Ausgestaltungen der Anordnung beschrieben. Diese gelten auch für die Vorrichtung und das Verfahren.

Gemäß einem bevorzugten Ausführungsbeispiel der Erfindung ist der Probekörper ein Radsatz für ein Schienenfahrzeug. Radsätze für Schienenfahrzeuge unterliegen bei bestimmungsgemäßer Benutzung im Eisenbahnverkehr einer hohen Belastung und führen bei Versagen zu einer Gefährdung von Fahrgästen und Personal. Auch ist bei einem Versagen eines Radsatzes mit einem erheblichen finanziellen Schaden zu rechnen. Um solche Probleme bei Radsätzen zu vermeiden, ist bei Entwicklung neuer Radsätze bzw. bei Überprüfung bereits eingesetzter Radsätze ein hohes Maß an Zuverlässigkeit und Realitätsnähe beim Durchführen von solchen Prüfungen erforderlich. Die erfindungsgemäß bereitgestellte Vorrichtung ist hervorragend für den Test solcher Radsätze geeignet, da ein Radsatz eine symmetrische Gestalt hat und somit an seinen beiden Endabschnitten, das heißt Rädern, an den Halteeinrichtungen eingespannt werden kann. Ohne den Radsatz selbst in Bewegung zu versetzen, ist es mit der erfindungsgemäßen Vorrichtung möglich, Risse, Materialermüdung oder sonstige Schwachstellen an dem Radsatz zu erkennen, die durch das Beaufschlagen einer Biegebeanspruchung hervorgerufen werden. Auch Druck- und Zugbeanspruchungen, Torsionsbeanspruchung bzw. besondere Lasten, die beim Beschleunigungs- und Bremsvorgang oder während einer Kurvenfahrt auf einen solchen Radsatz wirken, können mit Vorrichtungen gemäß Ausführungsbeispielen der Erfindung wirksam, präzise und zuverlässig geprüft werden.

Wenngleich das Testen von Radsätzen ein bevorzugtes Ausführungsbeispiel der Erfindung darstellt, so können mit der Vorrichtung ganz unterschiedliche Bauteile und Komponenten geprüft werden. Im Prinzip sind lediglich die Halteeinrichtungen auf die Geometrie eines Probekörpers anzupassen, womit die Vorrichtung einer Vielzahl von Anwendungen zugänglich gemacht werden kann. Fast unabhängig von der Art des Probekörpers ist eine Prüfung unter einsatznahen Bedingungen bei einer sicheren Betriebsweise ermöglicht.

Der Probekörper kann, wenn er als Radsatz ausgestaltet ist, ein erstes Radstück als ersten Abschnitt, ein zweites Radstück als zweiten Abschnitt und eine Welle zwischen dem ersten Radstück und dem zweiten Radstück aufweisen. Ist der Radsatz an den beiden Radstücken an den Halteeinrichtungen eingespannt, so liegt die Welle dazwischen frei und kann somit während der Prüfung einer Inspektion von Rissen oder dergleichen mit geringem Aufwand und hoher Benutzerfreundlichkeit zugänglich gemacht werden.

Im Weiteren werden Ausgestaltungen des Verfahrens beschrieben. Diese gelten auch für die Vorrichtung und die Anordnung.

Vorteilhaft wird als Probekörper ein Radsatz oder eine Radsatzwelle für ein Schienenfahrzeug geprüft. Es können aber auch alle anderen Arten von Wellen oder sonstigen Bauteile, die bei der (zum Beispiel bestimmungsgemäßen oder missbräuchlichen) Verwendung mechanischen Beanspruchungen unterliegen, geprüft und getestet werden.

Für die Prüfung an dem Radsatz oder an der Radsatzwelle kann ein Bremssystem angebracht werden. Dieses kann, da die Welle zwischen den beiden eingespannten Rädern frei liegt, ein in der Praxis eingesetztes Bremssystem für Radsätze sein, das aufgrund des großen zur Verfügung stehenden Raumes bequem an der Welle angebracht werden kann.

Im Folgenden werden exemplarische Ausführungsbeispiele der vorliegenden Erfindung mit Verweis auf die folgenden Figuren detailliert beschrieben.
- Fig. 1: zeigt schematisch eine Seitenansicht einer Anordnung zur Prüfung der Betriebsfestigkeit eines Probekörpers gemäß einem exemplarischen Ausführungsbeispiel der Erfindung.
- Fig. 2: zeigt schematisch eine Draufsicht der in Fig. 1 gezeigten Anordnung.
- Fig. 3: zeigt schematisch eine Seitenansicht einer Anordnung zur Prüfung der Betriebsfestigkeit eines Probekörpers gemäß einem anderen exemplarischen Ausführungsbeispiel der Erfindung.
- Fig. 4: zeigt schematisch eine Seitenansicht einer Anordnung zur Prüfung der Betriebsfestigkeit eines Probekörpers gemäß noch einem anderen exemplarischen Ausführungsbeispiel der Erfindung.
- Fig. 5: zeigt schematisch eine Seitenansicht einer Anordnung zur Prüfung der Betriebsfestigkeit eines Probekörpers gemäß einem weiteren exemplarischen Ausführungsbeispiel der Erfindung, bei der nur genau eine Linearantriebseinheit vorgesehen ist.
Die Darstellung in den Figuren ist schematisch und nicht maßstäblich. Gleiche oder ähnliche Komponenten in unterschiedlichen Figuren sind mit gleichen Bezugsziffern versehen.

**Fig. 1** zeigt eine Vorrichtung 40 zur Prüfung der Betriebsfestigkeit eines Radsatzes als Prüfkörper 10 gemäß einem exemplarischen Ausführungsbeispiel der Erfindung.

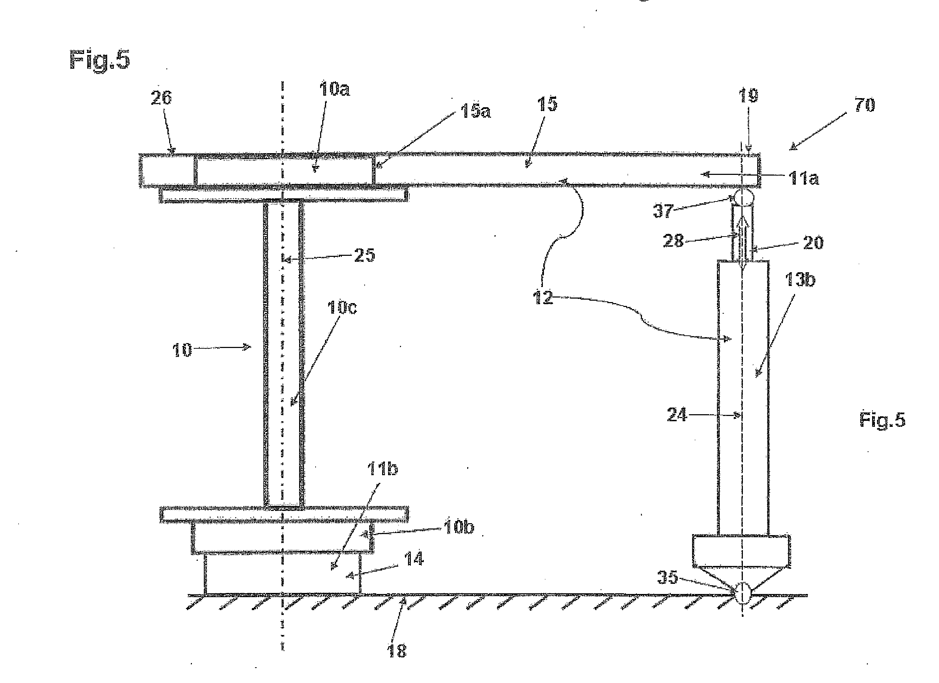

Die Vorrichtung 40 enthält eine erste Halteeinrichtung 11b, die zum kraft- und momentenabstützenden Einspannen eines ersten Endabschnitts 10b, das heißt eines ersten Rads, des Radsatzes für ein Schienenfahrzeug, eingerichtet ist. Die Vorrichtung 40 enthält ferner eine zweite Halteeinrichtung 11a, die der ersten Halteeinrichtung 11b gegenüberliegt und zum Einspannen eines zweiten Endabschnitts 10a, das heißt eines zweiten Rads des Radsatzes, eingerichtet ist. Zwischen den beiden Rädern des Radsatzes ist als zentraler Abschnitt 10c eine Radsatzwelle angeordnet. Eine Biegemomenteinleiteeinrichtung 12 dient zum Anlegen bzw. Einleiten eines Biegemoments als Prüflast an den mittels der ersten Halteeinrichtung 11b und der zweiten Halteeinrichtung 11a eingespannten Radsatz. Die Biegemomenteinleiteeinrichtung 12 ist, wie unten genauer beschrieben, gebildet aus einer Belastungsplatte 15 und einer (siehe Fig. 5) oder mehreren (siehe Fig. 1 bis Fig. 4) Linearantriebseinheiten 13a bis 13c. Mit der Vorrichtung 40 kann mittels entsprechenden Ansteuerns der Linearantriebseinheiten 13a bis 13c selektiv ein Axialbiegemoment oder ein Umlaufbiegemoment an den Probekörper 10 angelegt werden. Die Biegemomenteinleiteeinrichtung 12 ist zum Anlegen eines im Wesentlichen konstanten Biegemoments an den gesamten Radsatz geeignet und greift an der zweiten Halteeinrichtung 11a an.

Die Vorrichtung 40 kann auch zur Prüfung der Betriebsfestigkeit anderer Bauteile als des Probekörpers 10 verwendet werden. Deshalb wird die Erfindung allgemein im Zusammenhang mit der Prüfung der Betriebsfestigkeit von Probekörpern 10, insbesondere von länglichen Probekörpern 10, wie beispielsweise stabförmigen Probekörpern 10 beschrieben, bei denen im Betrieb eine Biegebeanspruchung auftritt.

Die Vorrichtung 40 weist die Halteeinrichtungen 11a, 11b zur Fixierung des Probekörpers 10 auf. Die Fixierung des Probekörpers 10 bedeutet, dass der Probekörper 10 zur Einleitung eines Umlaufbiegemomentes und/oder zur Einleitung von Axialkräften gelagert bzw. gehaltert ist.

Zur Halterung des Probekörpers 10 sind bei dem Ausführungsbeispiel gemäß Fig. 1 die zwei Halteeinrichtungen 11a, 11b vorgesehen, die den Probekörper 10 in der Prüfposition halten. Wie in Fig. 1 erkennbar, ist die Radsatzwelle bzw. eine dadurch geprägte Längsachse 25 des Probekörpers 10 in der Prüfposition in vertikaler Richtung ausgerichtet. Der Probekörper 10 steht also senkrecht auf einem der beiden Endabschnitte 10a, 10b. Eine andere Prüfposition, beispielsweise mit horizontaler Anordnung der Radsatzwelle 10c bzw. des Probekörpers 10, ist möglich. Dazu wird der Prüfstand horizontal ausgerichtet. Alternativ zu einer horizontalen oder vertikalen Anordnung des Probekörpers 10 ist auch eine winkelige Prüfgeometrie möglich.

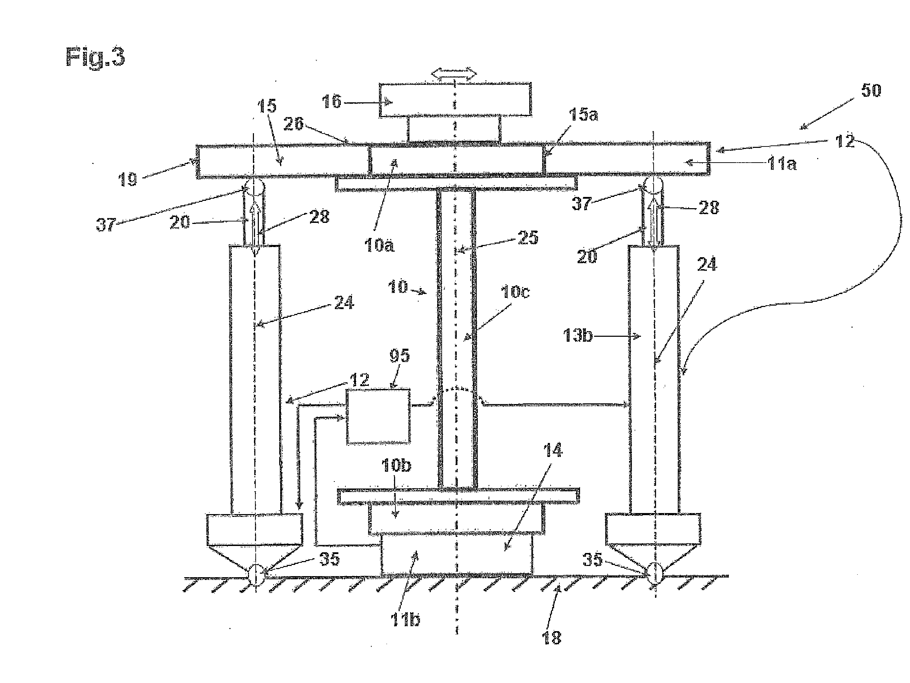

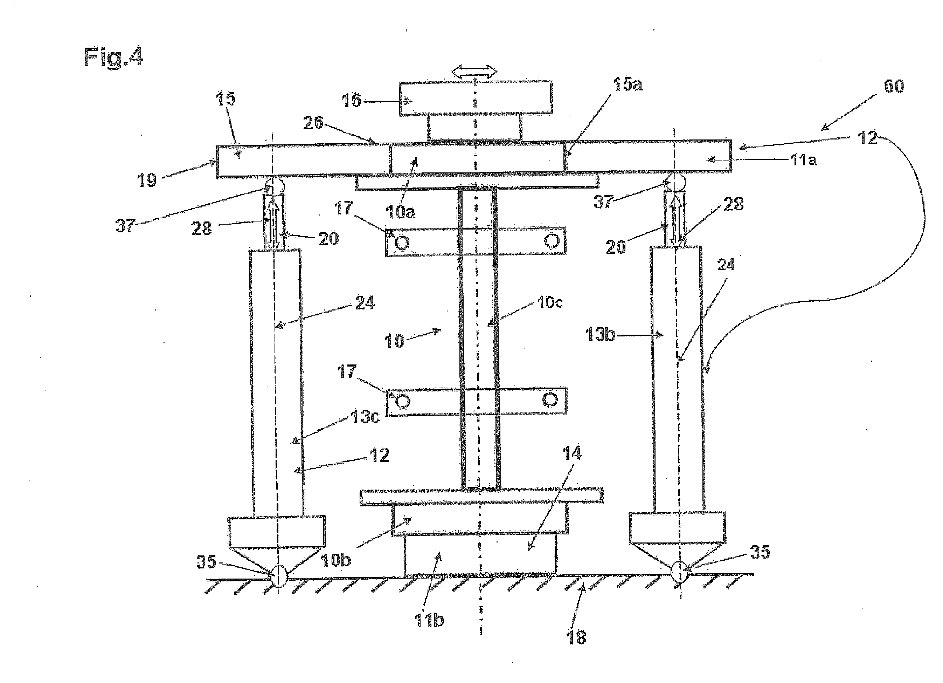

Die zweite Halteeinrichtung 11a fixiert den in der Prüfposition oben angeordneten zweiten Endabschnitt 10a des Probekörpers 10. Die zweite Halteeinrichtung 11a ist mit dem zweiten Endabschnitt 10a verbunden derart, dass durch die zweite Halteeinrichtung 11a Momente, insbesondere Biegemomente, in den zentralen Abschnitt 10c eingeleitet werden können. Die zweite Halteeinrichtung 11a kann mit dem zweiten Endabschnitt 10a drehfest oder drehbar verbunden sein. Im letzteren Fall ist die Einleitung eines Torsionsmoments in das zweite Ende 10a und somit in den Probekörper 10 möglich (vergleiche auch Drehantrieb 16 in Fig. 3 und Fig. 4). Die Kraft- und/oder Momenteneinleitung durch die zweite Halteeinrichtung 11a in den Probekörper 10 kann kraftschlüssig und/oder reibschlüssig und/oder formschlüssig erfolgen.

Die erste Halteeinrichtung 11b ist von zweiten Halteeinrichtung 11a beabstandet angeordnet. Die beiden Halteeinrichtungen 11a, 11b sind koaxial zu der Längsachse 25 des Probekörpers 10 angeordnet derart, dass die beiden Halteeinrichtungen 11a, 11b jeweils einen der beiden Endabschnitte 10a, 10b des Probekörpers 10 fixieren. Die erste Halteeinrichtung 11b ist anschaulich als eine Art Widerlager ausgebildet, das die durch die zweite Halteeinrichtung 11a eingeleiteten Momente und Kräfte aufnimmt. Die erste Halteeinrichtung 11b ist mit einer Basis oder mit einem Fundament 18 der Vorrichtung 40 verbunden.

Die zweite Halteeinrichtung 11a ist als mittiger Bereich der Belastungsplatte 15 ausgebildet, deren Gestalt in der Draufsicht von **Fig. 2** gut zu erkennen ist. Die Belastungsplatte 15 weist einen polygonalen (alternativ runden) Zentralabschnitt 26 auf, von dem aus sich drei Arme 19 radial nach außen erstrecken. Anders ausgedrückt schließen Symmetrieachsen 27 benachbarter Arme 19 miteinander einen Winkel ein. Anders als in Fig. 2 gezeigt kann dieser Winkel bei Vorsehen von drei Armen 19 auch jeweils 120° sein. Die Belastungsplatte 15 weist ferner eine zentrale Halteöffnung 15a auf (nicht zu sehen in Fig. 2), in welcher der zweite Endabschnitt 10a aufgenommen ist. Der zweite Endabschnitt 10a ist gemäß dem hier beschriebenen Ausführungsbeispiel als erstes Rad eines Radsatzes für ein Schienenfahrzeug ausgebildet. Die Halteöffnung 15a ist dabei so ausgebildet, dass der Spurkranz des ersten Rades an der Unterseite der Belastungsplatte 15 bündig anliegt. Das erste Rad bzw. allgemein der zweite Endabschnitt 10a kann fest oder drehbar in der Halteöffnung 15a eingespannt sein. Die zweite Halteeinrichtung 11a ist somit in einem zentralen Bereich der Belastungsplatte 15 ausgebildet, an welcher der Probekörper 10 mittig und die Mehrzahl von Linearantriebseinheiten 13a bis 13c außermittig angreifen.

Die Vorrichtung 40 gemäß Fig. 1 umfasst ferner die Biegemomenteinleiteeinrichtung 12 zur Einleitung einer Prüflast in den Probekörper 10. Die Biegemomenteinleiteeinrichtung 12 weist hier abgesehen von der Belastungsplatte 15 die drei Linearantriebe 13a bis 13c auf, siehe Fig. 2. Zur Erzeugung eines Umlaufbiegemoments sind wenigstens drei Linearantriebe 13a, 13b, 13c, insbesondere Prüfzylinder bzw. Zylinder-Kolben-Aggregate, vorteilhaft. Dabei sind zweckmäßigerweise Hydraulikzylinder vorgesehen. Andere Arten von Linearantrieben, beispielsweise mechanische Antriebe oder elektromotorische Antriebe sind möglich. Wie in Fig. 1 und vor allem in Fig. 2 zu erkennen, sind die Linearantriebe 13a, 13b, 13c entlang des Umfangs des Probekörpers 10 verteilt angeordnet. Im Prüfbetrieb sind die Linearantriebe 13a, 13b, 13c mit dem Probekörper 10 verbindbar, und zwar mittels der zweiten Halteeinrichtung 11a. Die zweite Halteeinrichtung 11a ist dabei im Wesentlichen ortsfest (eine Verkippung bzw. Anhebung/Absenkung ist im Prüfbetrieb unter dem Einfluss der Linearantriebe 13a, 13b, 13c möglich) angeordnet, ebenso die Verankerung der Linearantriebe 13a, 13b, 13c.

Die Linearantriebe 13a, 13b, 13c sind entlang zueinander paralleler Antriebsachsen 24 und parallel zu einer Längs- oder Einspannachse 25 des Probekörpers 10 angeordnet und verfahrbar, wie in Fig. 1 gut zu erkennen. Die Einspannachse 25 entspricht einer Erstreckungsrichtung des Probekörpers 10 zwischen der ersten Halteeinrichtung 11b und der zweiten Halteeinrichtung 11a. Die Linearantriebe 13a, 13b, 13c, die in Form von Zylinder-Kolben-Aggregaten ausgestaltet sein können, können winkelverstellbare Zylinder umfassen. Es ist auch möglich, Zylindergruppen als Linearantriebe 13a, 13b, 13c vorzusehen, wobei jede Zylindergruppe radial und axial angeordnete Zylinder aufweisen kann, die am selben Krafteinleitungspunkt angreifen. Zum Beispiel mit solchen Zylinderanordnungen kann das Umlaufbiegemoment durch Aufbringen von Prüfkräften überlagert werden.

Ferner ist in Fig. 1 und Fig. 2 dargestellt, dass die einzelnen Linearantriebe 13a, 13b, 13c jeweils von dem Probekörper 10 radial beabstandet sind. Damit sind auch die Verbindungsstellen zwischen den Linearantrieben 13a, 13b, 13c und der zweiten Halteeinrichtung 11a, also die Kraftangriffspunkte der Linearantriebe 13a, 13b, 13c, von dem Probekörper 10, insbesondere von dem zweiten Endabschnitt 10a, radial beabstandet, wodurch eine Hebelwirkung erreicht wird. Die Linearantriebe 13a, 13b, 13c, die zweite Halteeinrichtung 11a und der zweite Endabschnitt 10a bzw. der Probekörper 10 bilden eine Hebelanordnung, durch die das Biegemoment in dem zentralen Abschnitt 10c, das heißt der Welle, erzeugbar ist. Die Hebelwirkung zwischen den Linearantrieben 13a, 13b, 13c und dem zentralen Abschnitt 10c kann aufgrund der parallelen Anordnung der Linearantriebe 13a, 13b, 13c von einer Axialbelastung überlagert werden. Eine Überlagerung verschiedener Lastfälle ist dabei möglich.

Die Linearantriebe 13a, 13b, 13c sind mit der Basis oder mit dem Fundament 18 der als Prüfstand konzipierten Vorrichtung 40 gelenkig oder elastisch an den Fundament 18 gelagert, um die Wirkung von Zwangskräften einzudämmen bzw. zu eliminieren. Hierfür sind gelenkige oder elastische Verbindungsmittel 35 zwischen dem Fundament 18 und den Linearantrieben 13a, 13b, 13c angeordnet. Gegenüberliegende Endabschnitte der Linearantriebe 13a, 13b, 13c, genauer gesagt Endabschnitte von deren Zylindern 20, sind an der Belastungsplatte 15 mittels gelenkiger oder elastischer Verbindungsmittel 37 gelagert. Somit kann jeder der Linearantriebe 13a, 13b, 13c fuß- und/oder kopfseitig gelenkig oder elastisch gelagert sein.

In Fig. 2 ist dargestellt, dass zur Verbindung der einzelnen Linearantriebe 13a, 13b, 13c die zweite Halteeinrichtung 11a die Arme 19 aufweist, die sich radial von der Belastungsplatte 15 nach außen erstrecken. Dabei ist jeweils ein Arm 19 mit einem Linearantrieb 13a, 13b, 13c, insbesondere mit einer Kolbenstange 20 des jeweils als Zylinder-Kolben-Aggregats ausgestalteten Linearantriebs 13a, 13b, 13c, verbunden, Wie in Fig. 1 mittels Pfeilen 28 angedeutet ist, ist jede der Kolbenstangen separat 20 hin- und herbewegbar, womit eine Biegebeanspruchung sowie eine Zug- oder Druckkraft in den Probekörper 10 einkoppelbar ist.

In Fig. 1 ist ferner dargestellt, dass der unteren ersten Halteeinrichtung 11b eine Messeinrichtung 14 zur Kraft- und/oder Momentenmessung zugeordnet ist. Konkret ist die Messeinrichtung 14 in die erste Halteeinrichtung 11b integriert. Es ist auch möglich, die Messeinrichtung 14 der zweiten Halteeinrichtung 11a oder beiden Halteeinrichtungen 11a, 11b funktional bzw. lokal zuzuordnen. Es können auch andere Messeinrichtungen, insbesondere eine oder mehrere andere Messeinrichtungen 14, vorgesehen sein, die anderweitig die jeweiligen Belastungen am Prüfkörper 10 erfassen, zum Beispiel kraftbasiert oder wegbasiert. Beispielsweise kann die Messeinrichtung 14 als indirekte Messeinrichtung 14 ausgeführt sein, wobei die Messung über die Einstellung des Drucks in den Linearantrieben 13a, 13b, 13c erfolgt. Die Messeinrichtung 14 kann auch beispielsweise wenigstens einen Dehnmessstreifen umfassen, der direkt auf den Probekörper 10 (zum Beispiel auf den zentralen Abschnitt 10c) aufgebracht ist, insbesondere aufgeklebt ist. Die über die Messeinrichtung 14 ermittelten Messwerte können einerseits direkt zur direkten Auswertung der Belastungsprüfung verwendet werden und andererseits einer Steuer- oder Regeleinrichtung (nicht dargestellt) zugeführt werden, so dass die Biegung des zentralen Abschnitts 10c bzw. allgemein des Probekörpers 10, die beispielsweise durch die Dehnung des Dehnmessstreifens ermittelbar ist, als Istwert für die Steuer- oder Regeleinrichtung dient.

Die Vorrichtung 40 weist ferner eine Steuereinheit 85 auf, die eingerichtet ist, eine Last-Zeit-Charakteristik vorzugeben, entsprechend welcher die Prüflast an den eingespannten Probekörper 10 anzulegen ist. Wie Fig. 1 zu entnehmen ist, legt die Steuereinheit 85 entsprechende Steuersignale an die Biegemomenteinleiteeinrichtung 12 an. Dadurch kann der zeitliche Verlauf der aufgebrachten Lasten zeitlich beliebig gesteuert werden kann. Es ist auch möglich, dass der zeitliche Verlauf jeder einzelnen aufgebrachten Lastkomponente zeitlich beliebig gesteuert werden kann. Obwohl in den Ausführungsbeispielen gemäß Fig. 3 bis Fig. 5 eine Steuereinheit 85 nicht gezeigt ist, kann auch in diesen Ausführungsbeispielen eine Steuereinheit 85 vorgesehen werden, die wahlweise ein anzulegendes Biegemoment oder eine beliebige andere Last an den Probekörper 10 anlegen kann.

Eine Vorrichtung 50 gemäß einem anderen Ausführungsbeispiel der Erfindung ist in **Fig. 3** dargestellt, bei der eine als Drehantrieb 16 ausgestaltete Torsionsmomenteinleiteeinrichtung zur Einleitung eines Torsionsmomentes in den Probekörper 10 vorgesehen ist. Der Drehantrieb 16 ist der oberen zweiten Halteeinrichtung 11a zugeordnet und mit dem zweiten Endabschnitt 10a zur Aufbringung von Torsionsmomenten verbindbar. Bei diesem Ausführungsbeispiel ist die ortsfest angeordnete zweite Halteinrichtung 11a drehbar mit dem zweiten Endabschnitt 10a des Probekörpers 10 verbunden, wobei die zweite Halteeinrichtung 11a zur Einleitung von Biegemomenten angepasst ist. Die übrigen Komponenten der Vorrichtung 50 entsprechen den vorstehend beschriebenen Komponenten der Vorrichtung 40.

Die Vorrichtung 50 weist ferner eine Regelungseinheit 95 auf, die eingerichtet ist, eine Last-Zeit-Charakteristik vorzugeben, entsprechend welcher die Prüflast an den eingespannten Probekörper 10 anzulegen ist. Wie Fig. 1 zu entnehmen ist, legt die Regeleinheit 95 entsprechende Regelungssignale an die Biegemomenteinleiteeinrichtung 12 an, in Reaktion auf der Regelungseinheit 95 von der Messeinrichtung 14 bereitgestellten Rückkopplungssignale. Somit können für die angelegte Prüflast indikative Rückführungsdaten des Probekörpers 10 an die Regelungseinheit 95 als Basis für die Regelung übermittelt werden. Dadurch kann der zeitliche Verlauf der aufgebrachten Lasten zeitlich beliebig geregelt werden. Es ist auch möglich, dass der zeitliche Verlauf jeder einzelnen aufgebrachten Lastkomponente zeitlich beliebig geregelt werden kann. Obwohl in den Ausführungsbeispielen gemäß Fig. 1, Fig. 4, Fig. 5 eine Regelungseinheit 95 nicht gezeigt ist, kann auch in diesen Ausführungsbeispielen eine Regelungseinheit 95 vorgesehen werden, die wahlweise ein anzulegendes Biegemoment oder eine beliebige andere Last an den Probekörper 10 anlegen kann.

Bei einer Vorrichtung 60 gemäß einem anderen Ausführungsbeispiel der Erfindung gemäß **Fig. 4** sind zwei Zusatzlasteinleiteeinrichtungen 17 mit dem Probekörper 10, insbesondere dem zentralen Abschnitt 10c, zur Kraft- und/oder Momenteneinleitung verbunden. Eine andere Anzahl von Zusatzlasteinleiteeinrichtungen 17, beispielsweise eine oder mehr als zwei Zusatzlasteinleiteeinrichtungen 17, ist möglich. Die wenigstens eine Zusatzlasteinleiteeinrichtung 17 ist von der zweiten Halteeinrichtung 11a beabstandet angeordnet. Durch die Zusatzbelastungseinrichtungen 17 können Biegemomente und/oder Torsionsmomente und/oder Axialkräfte, insbesondere Zug-/Druckkräfte in den Probekörper 10 eingeleitet werden. Zum Beispiel kann damit eine auf einen Radsatz als Probekörper 10 einwirkende Bremskraft realisiert oder nachgebildet werden.

Bei einer Vorrichtung 70 gemäß noch einem anderen Ausführungsbeispiel der Erfindung gemäß **Fig. 5** ist im Unterschied zu Fig. 1 nur eine einzige Linearantriebseinheit 13b vorgesehen. Diese kann ein Axialbiegemoment an den Probekörper 10 anlegen, wobei ein gemäß Fig. 5 rechtsseitiger Abschnitt der Belastungsplatte 15 hier als Ausleger oder Hebelarm ausgestaltet ist. Bei der Vorrichtung 70 können optional auch Merkmale der Ausführungsbeispiele von Fig. 3 und Fig. 4 implementiert werden, zum Beispiel ein Drehantrieb 16 und/oder eine oder mehrere Zusatzlasteinleiteeinrichtungen 17. Mit der Vorrichtung 70 kann ein Axialbiegemoment im Unterschied zu einem Umlaufbiegemoment an den Probekörper 10 angelegt werden.

Die Vorrichtung 40 gemäß Fig. 1 funktioniert wie folgt:
Der Probekörper 10 wird in die Halteeinrichtungen 11a, 11b eingespannt und fixiert, derart, dass eine Umlaufbiegebelastung in den Probekörper 10 durch den oberen zweiten Endabschnitt 10a eingeleitet werden kann. Dazu wird die Belastungsplatte 15 mit dem oberen zweiten Endabschnitt 10a verbunden, so dass zwischen den Linearantrieben 13a, 13b, 13c und dem Probekörper 10 eine Kraft- und Momentenverbindung entsteht. Dann kann der Prüfbetrieb begonnen werden, wobei durch die Linearantriebe 13a, 13b, 13c mehrere Axialkräfte entlang des Umfangs des Probekörpers 10 aufgebracht werden. Die Axialkräfte wirken parallel zur Längsachse 25 des Probekörpers 10 und greifen beabstandet von dem Probekörper 10, insbesondere von dessen oberem zweiten Endabschnitt 10a, an der zweiten Halteeinrichtung 11a an. Mittels entsprechenden Ansteuerns der Linearantriebe 13a, 13b, 13c kann ein sinusförmiger, phasenverschobener Kraftverlauf in den jeweiligen Zylinder-Kolben-Aggregaten erzeugt werden, der zu einer gewünschten Umlaufbiegebeanspruchung in dem Probekörper 10 führt. Die Umlaufbiegebelastung kann mit einer Axialbelastung, insbesondere einer Druck- oder Zugbelastung, überlagert werden.

Wie in Fig. 3 und Fig. 4 dargestellt, können weitere Belastungszustände simuliert werden, beispielsweise durch die Überlagerung von Torsionsmomenten und/oder die Einleitung zusätzlicher Momente oder Kräfte in den zentralen Abschnitt 10c.

Im Prüfbetrieb sind die Prüfkräfte, die durch einen Hebel das Prüfmoment bewirken, parallel oder unter einem Winkel zur Längsachse 25 des Probekörpers 10 gerichtet, wodurch Seiten- und Radaufstandskräfte simuliert werden können. Die Wirkrichtung der Prüfkräfte kann verstellbar sein. Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Vorrichtung (40, 50, 60, 70) zur Prüfung der Betriebsfestigkeit eines Probekörpers (10), wobei die Vorrichtung (40, 50, 60, 70) aufweist:
eine erste Halteeinrichtung (11b), die zum momentenfesten Einspannen eines ersten Abschnitts (10b) des Probekörpers (10) eingerichtet ist derart, dass ein freies Verschieben, Drehen oder Schwenken des Probekörpers (10) an der Einspannstelle der ersten Halteeinrichtung (11b) unterbunden ist;
eine zweite Halteeinrichtung (11a), die zum Einspannen eines zweiten Abschnitts (10a) des Probekörpers (10) eingerichtet ist; und
eine Biegemomenteinleiteeinrichtung (12), die zum Anlegen eines Biegemoments als Prüflast an den mittels der ersten Halteeinrichtung (11b) und der zweiten Halteeinrichtung (11a) eingespannten Probekörper (10) eingerichtet ist;
wobei die Biegemomenteinleiteeinrichtung (12) zum Anlegen des Biegemoments an den Probekörper (10) an der zweiten Halteeinrichtung (11a) angreift.

2. Vorrichtung (40, 50, 60, 70) nach Anspruch 1, wobei die Biegemomenteinleiteeinrichtung (12) mindestens eine Linearantriebseinheit (13a bis 13c) aufweist, die an der zweiten Halteeinrichtung (11a) angreift.

3. Vorrichtung (40, 50, 60) nach Anspruch 2, wobei eine Mehrzahl von Linearantriebseinheiten (13a bis 13c) vorgesehen sind und Antriebsachsen (24) der Mehrzahl von Linearantriebseinheiten (13a bis 13c) parallel zueinander und um den Probekörper (10) herum sowie von dem Probekörper (10) beabstandet angeordnet sind.

4. Vorrichtung (40, 50, 60) nach Anspruch 3, wobei die Antriebsachsen (24) parallel zu einer Einspannachse (25) des Probekörpers (10) verlaufen, wobei die Einspannachse (25) einer Erstreckungsrichtung des Probekörpers (10) zwischen der ersten Halteeinrichtung (11b) und der zweiten Halteeinrichtung (11a) entspricht.

5. Vorrichtung (40, 50, 60, 70) nach einem der Ansprüche 1 bis 4, wobei die zweite Halteeinrichtung (11a) flächig, insbesondere plattenförmig, ausgebildet ist.

6. Vorrichtung (40, 50, 60, 70) nach einem der Ansprüche 2 bis 5, wobei die zweite Halteeinrichtung (11a) in einem zentralen Bereich einer Belastungsplatte (15) ausgebildet ist, an welcher der Probekörper (10) mittig eingespannt ist und an welcher die mindestens eine Linearantriebseinheit (13a bis 13c) außermittig angreift.

7. Vorrichtung (40, 50, 60, 70) nach einem der Ansprüche 1 bis 6, wobei die Biegemomenteinleiteeinrichtung (12) eingerichtet ist, ein über die gesamte Länge des Probekörpers (10) hinweg konstantes Biegemoment anzulegen.

8. Vorrichtung (40, 50, 60, 70) nach einem der Ansprüche 1 bis 7, wobei die Biegemomenteinleiteeinrichtung (12) eingerichtet ist, zusätzlich oder alternativ zu dem Einleiten eines Biegemoments eine Druck- oder Zugbeanspruchung an den Probekörper (10) anzulegen.

9. Vorrichtung (50, 60) nach einem der Ansprüche 1 bis 8, aufweisend eine Torsionsmomenteinleiteeinrichtung (16), die zum Anlegen eines Torsionsmoments als zusätzliche Prüflast an den Probekörper (10) eingerichtet ist.

10. Vorrichtung (50, 60) nach Anspruch 9, wobei die Torsionsmomenteinleiteeinrichtung (16) an dem zweiten Abschnitt (10a) des Probekörpers (10) oder an der zweiten Halteeinrichtung (11a) angeordnet ist.

11. Vorrichtung (40, 50, 60, 70) nach einem der Ansprüche 1 bis 10, ferner aufweisend zumindest eines der folgenden Merkmale:
die Vorrichtung (60) weist eine Zusatzlasteinleiteeinrichtung (17) auf, die zum Anlegen einer Zusatzlast als zusätzliche Prüflast an den Probekörper (10) eingerichtet ist und die an einem zentralen Abschnitt (10c) des Probekörpers (10) zwischen dem ersten Abschnitt (10b) des Probekörpers (10) und dem zweiten Abschnitt (10a) des Probekörpers (10) angeordnet ist;
die Biegemomenteinleiteeinrichtung (12) ist eingerichtet, an den Probekörper (10) ein Umlaufbiegemoment oder ein Axialbiegemoment anzulegen;
die Vorrichtung (40, 50) weist eine Steuereinheit (85) oder eine Regelungseinheit (95) auf, die eingerichtet ist, eine Last-Zeit-Charakteristik vorzugeben, entsprechend welcher die Prüflast an den eingespannten Probekörper (10) anzulegen ist;
die Vorrichtung (40, 50, 60, 70) weist eine Messeinrichtung (14) auf, die zum Messen einer Reaktion des Probekörpers (10) auf die Prüflast eingerichtet ist und die an dem ersten Abschnitt (10b) des Probekörpers (10) angeordnet ist;
die erste Halteeinrichtung (11b) und die zweite Halteeinrichtung (11a) sind zum Einspannen des Probekörpers (10) derart eingerichtet, dass der Probekörper (10) während der Prüfung im Wesentlichen ruht.

12. Anordnung zur Prüfung der Betriebsfestigkeit eines Probekörpers (10), wobei die Anordnung aufweist:
eine Vorrichtung (40, 50, 60, 70) nach einem der Ansprüche 1 bis 11;
den Probekörper (10), der mittels der ersten Halteeinrichtung (11b) und der zweiten Halteeinrichtung (11a) der Vorrichtung (40, 50, 60, 70) eingespannt oder einspannbar ist.

13. Anordnung nach Anspruch 12, wobei der Probekörper (10) ein langgestrecktes Bauteil, insbesondere ein Radsatz für ein Schienenfahrzeug ist.

14. Verfahren zur Prüfung der Betriebsfestigkeit eines Probekörpers (10), wobei das Verfahren aufweist:
momentenfestes Einspannen eines ersten Abschnitts (10b) des Probekörpers (10) an einer ersten Halteeinrichtung (11b) derart, dass ein freies Verschieben, Drehen oder Schwenken des Probekörpers (10) an der Einspannstelle der ersten Halteeinrichtung (11b) unterbunden ist;
Einspannen eines zweiten Abschnitts (10a) des Probekörpers (10) an einer zweiten Halteeinrichtung (11a);
Anlegen eines Biegemoments als Prüflast an den mittels der ersten Halteeinrichtung (11b) und der zweiten Halteeinrichtung (11a) eingespannten Probekörper (10);
wobei das Biegemoment an der zweiten Halteeinrichtung (11a) in den Probekörper (10) eingeleitet wird.

15. Verfahren nach Anspruch 14, aufweisend zumindest eines der folgenden Merkmale:
ein zeitlicher Verlauf der angelegten Prüflast wird zeitlich variiert;
ein zeitlicher Verlauf von individuellen Komponenten der angelegten Prüflast wird zeitlich variiert.
